# EUROPEAN PATENT APPLICATION

(11) **EP 0 908 303 A2**
(43) Date of publication of application: **14.04.1999**
(21) Application number: 98308160.5
(22) Date of filing: 07.10.1998
(51) Int. Cl.: B32B 27/02, B60R 13/02

(54) **Vehicle interior panel and method of manufacture**

(30) Priority: 08.10.1997 US 947204
(71) Applicant: PRINCE CORPORATION, Holland Michigan 49423 (US)
(72) Inventor: Beard, Dennis J., Holland, Michigan 49424 (US); Rozek, Harry James, Watkinsville, Georgia 30677 (US)
(74) Representative: Waldren, Robin Michael

(57) **Abstract**

A vehicle panel utilizes a blend of fibers to define a batt and preferably copolymer polyester fibers which are made of a thermoplastic material, which fibers are carded, lapped and heated to form a batt which, in turn, is sandwiched between two mats. The mats are made of a fibrous material which can include natural fibers and thermoplastic fibrous materials which are bonded to the batt utilizing a heated shaping tool for providing a sandwich structure including outer layers of polyester scrim and an upholstery material resulting in a finished vehicle panel such as a headliner.

## Description

### BACKGROUND OF THE INVENTION

The present invention relates to a vehicle interior decorative panel, such as a headliner, door panel or the like, and a method for manufacturing the same.

In recent years, vehicle panels, such as headliners, have been integrally formed of a variety of different materials, including foam, fibrous materials and fiberboard. U.S. Patent Nos. 4,828,910 and 5,068,001 represent sound absorbing laminate structures particularly useful for manufacturing headliners and which comprise a fibrous batt material surrounded by matting, scrim and finished with an upholstered material to form acoustically absorptive headliners for vehicles. Foam materials have also been employed in connection with the molding of vehicle headliners, however, they do not provide the desired acoustic dampening properties desirable in modern headliners or other vehicle panels.

In the manufacture of the fibrous mat headliners of the past, a thermosetting binder was employed which, although providing the desired properties, was somewhat expensive and required additional manufacturing steps. Accordingly, there remains a need for a vehicle panel which displays the desired acoustic properties and which can be manufactured of fibrous materials without the use of a resin binder.

### SUMMARY OF THE PRESENT INVENTION

The vehicle panel of the present invention provides such an improved construction and method of manufacturing by utilizing a blend of fibers to define a batt sandwiched on opposite sides by mats. The batt is preferably copolymer polyester fibers which are made of a thermoplastic material and which are carded, lapped and heated to define the batt. The mats are also made of a fibrous material which can be a natural fiber or in one embodiment thermoplastic fibrous materials which are bonded to the batt utilizing a heated shaping tool. The resultant structure is enclosed between two layers of polyester scrim on one surface of which an upholstery material is bonded resulting in a finished vehicle panel such as a headliner. The panel so formed is either recyclable or biodegradable and, therefore, environmentally friendly and provides an improved vehicle panel with the desired acoustic as well as mechanical properties for supporting accessories such as visors, grab handles, loud speakers, consoles or the like which may be integrally attached to the headliner or other accessories attached to other such vehicle panels.

These and other features, objects and advantages of the present invention will become apparent upon reading the following description thereof together with reference to the accompanying drawing figure.

### BRIEF DESCRIPTION OF THE DRAWING

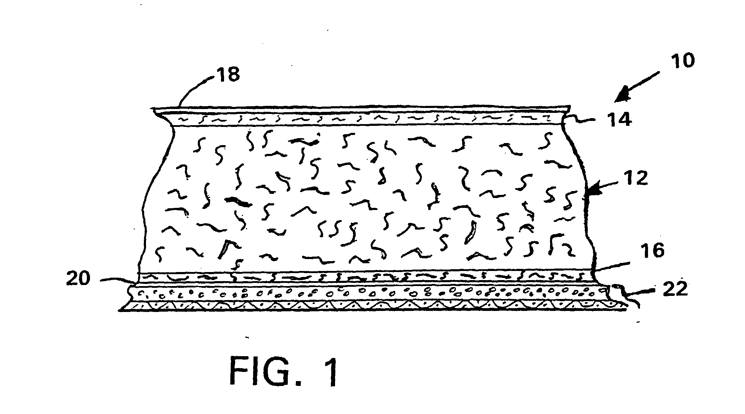

Fig. 1 is an enlarged fragmentary cross-sectional view of a vehicle panel, such as a headliner, made according to first and second embodiments of the invention.

### DETAILED DESCRIPTION OF THE PREFERRED EMBODIMENT

A vehicle headliner 10 is shown in Fig. 1 in which a central batt 12 is formed and comprises a fibrous polymeric material having a thickness of from about 5 to 40 mm in a preferred embodiment of the invention and which, as described below, can be made of a fibrous copolymeric material which is processed to provide the fibrous batt forming the core of the headliner 10. On opposite sides of the batt are relatively thin upper and lower mats 14 and 16, respectively, with each mat having a thickness of about .5 to 1.5 mm and formed of either a natural fibrous material blended with a thermoplastic fiber or in another embodiment with blends of thermoplastic fibers resulting in a structurally supportive sandwich for the relatively open batt 12. A polyester scrim layer 18 of conventional construction is bonded to the mat 14 while a second layer of scrim material 20 may be bonded to mat 16. Finally, an upholstery material 22, such as a foam-backed fabric, is bonded to the scrim layer 20. The headliner 10 typically is manufactured in a continuous process with the batt and mats being bonded together with the scrim and upholstery material utilizing heated pressure rollers and a shaping tool forming a three-dimensional headliner shape, which can be subsequently processed to include vehicle accessories mounted thereto.

In a first embodiment of the invention, the batt is formed of copolymeric polyester fibers having a length of approximately 2 inches which, in the preferred embodiment, may be a bicomponent fiber having a higher melting point core and a coaxially aligned lower melting point material for the outer layer. The outer layer material may be either polyester or polypropylene having a melting point of from about 130° to 200° C. The batt is made by carding the raw fiber materials to singulate the fibers which are then supplied to a lapping machine for vertically pleating the fibers to form a batt having a thickness of from 5 to 40 mm. Subsequently, the batt is heated at a temperature of from 130° to 200° C and preferably at approximately 150° C and pressed in an oven conveyor for a time sufficient for the lower melting point outer layer of the copolymeric fibers to melt and bond to adjacent fibers resulting in a stable batt construction which forms the core 12 of the headliner 10. The batt thickness can range from about 5 to 40 mm for different panels.

In a first embodiment, the mats 14 and 16 are made of a natural fiber such as jute, sisal or kenaf having a length of approximately 2 inches which are blended with a thermoplastic fiber, such as polypropylene, polyester or polyethylene, having a melting point of from 160° to 200° C. The ratio of natural fibers to the thermoplastic fibers is from about 85 to 80 percent natural fibers to thermoplastic fibers. Glass fibers having a length of approximately 2 inches can also be employed instead of natural fibers in forming the mats. The fibers are carded to singulate them and randomly dropped on a conveyor to form a random pattern of crisscrossed fibers which are blended with the thermoplastic fibers constituting 15 to 20 percent of the overall mat construction. Subsequently, the blend is heated and compressed in an oven conveyor at about 160° to 200° C, while scrim is added to one side thereof to simultaneously bond the scrim and mats together. One of the mats further includes the step of bonding the upholstery material 22 in the oven conveyor such that layers 14 and 18 are integrally formed, while layers 16, 20 and 22 are integrally formed.

In the first embodiment, the batt 12 in the form of a continuous roll is sprayed on opposite sides with a liquid thermosetting binder. The mats, also in rolls, and the batt are simultaneously fed to a heated shaping tool with the sandwich alignment shown in Fig. 1. The tool heats the thermosetting binder to fuse the batt and mats together in the desired three-dimensional shape of, for example, a headliner. The shaping tool may include both a press and die cutting structure which heats and presses the sandwich material, as shown in Fig. 1, into the desired three-dimensional shape for a given vehicle headliner or other panel.

In the second embodiment of the invention, the step of adding a thermosetting binder sprayed to the opposite sides of the batt is eliminated by utilizing mats having a higher percentage of thermoplastic fibers. Thus, in the second embodiment, the mats have thermoplastic binders of polypropylene or polyester of from about 30 to 80 percent with the remaining material being natural fibers or glass fibers as in the first embodiment. The mat is formed utilizing high temperature rollers after carding, mixing and blending as in the first embodiment and formed in a cold tool to include the upholstery and batt material to eliminate the spray-on thermosetting binder employed with the first embodiment. In the second embodiment, the thermosetting properties of the liquid binder employed in the first embodiment are unnecessary since sufficient thermoplastic material is provided in the mats to provide temperature stability for the resultant headliner. In both embodiments, the batt is substantially of the same construction and comprises results in a 200 to 2000 grams per meter squared at 20 mm of thickness density material having excellent acoustic properties for use in, for example, a vehicle headliner. With either embodiment, natural fibers are preferred in the manufacture of the mats in place of the fiberglass and resinous material utilized in the past and the use of thermoplastic fibers in suitable amounts provide the desired structural and thermal stability for the resultant vehicle panel.

It will become apparent to those skilled in the art that various modifications to the preferred embodiments of the invention as described herein can be made without departing from the spirit or scope of the invention as defined by the appended claims.

## Claims

1. A vehicle panel comprising a sandwich structure having a central batt formed of thermoplastic fibers having a density of from about 200 to 2000 grams/m² at 20 mm thickness, said batt surrounded on opposite sides by structural mats having a mixture of fibers including about 15 to 20 percent thermoplastic fibers and 85 to 80 percent natural fibers, wherein the mats are bonded to opposite sides of the batt by a thermosetting binder.

2. The panel as defined in claim 1 wherein said batt includes copolymer fibers.

3. The panel as defined in claim 2 wherein said copolymer fibers are coaxial bicomponent fibers with an outer layer having a lower melting point than their center.

4. The panel as defined in claim 3 wherein said outer layer of said copolymer fibers have a melting point of from about 130° to 200°C.

5. The panel as defined in claim 4 wherein said copolymer fibers are made of a polyester.

6. The panel as defined in claim 4 wherein said outer layer of said copolymer fibers is polypropylene.

7. The panel as defined in claim 6 wherein each of said mats have a thickness of from about .5 to 1.5 mm.

8. The panel as defined in claim 7 wherein each of said mats comprise from about 15 to 20 percent of thermoplastic fibers and from about 85 to 80 percent natural fibers.

9. The panel as defined in claim 8 wherein said natural fibers are selected from a group including jute, sisal or kenaf.

10. The panel as defined in claim 1 wherein each of said mats have a thickness of from about .5 to 1.5 mm.

11. The panel as defined in claim 10 wherein said batt has a thickness of from about 5 to 40 mm.

12. The panel as defined in claim 11 wherein said natural fibers are selected from a group including jute, sisal or kenaf.

13. A vehicle panel comprising a sandwich structure having a central core batt formed of thermoplastic fibers surrounded on opposite sides by structural mats having a mixture of thermoplastic fibers and natural or glass fibers with the thermoplastic fibers constituting 30 to 80 percent of the mixture.

14. The panel as defined in claim 13 wherein said batt has a density of from about 200 to 2000 grams/m² at 20 mm thickness.

15. The panel as defined in claim 14 wherein said natural fibers are selected from a group including jute, sisal or kenaf.

16. The panel as defined in claim 15 and further including a layer of polyester scrim on at least one of the surfaces of said mat opposite said batt.

17. The panel as defined in claim 16 and further including an upholstery material bonded to said layer of scrim.

18. The panel as defined in claim 17 wherein said thermoplastic fibers of said batt comprise copolymer fibers.

19. The panel as defined in claim 18 wherein said copolymer fibers are coaxial bicomponent fibers with an outer layer having a lower melting point than their center.

20. The panel as defined in claim 19 wherein said outer layer of said copolymer fibers have a melting point of from about 130° to 200°C.

21. The panel as defined in claim 13 wherein said batt has a thickness of from about 5 to 40 mm.

22. The panel as defined in claim 21 wherein said mats have a thickness of from about .5 to 1.5 mm.

23. A method of manufacturing an interior panel of a vehicle comprising the steps of:
carding fibers of copolymeric material;
lapping the carded fibers to form a pleated batt;
heating and pressing the fibers to a temperature for fusing adjacent fibers to form a batt;
carding and blending natural and thermoplastic fibers and heating this mixture to form a mat;
applying a thermosetting binder to opposite sides of said batt; and
feeding said batt and mats on opposite sides of said batt in a heated forming tool to form a panel.

24. The method as defined in claim 23 wherein said heating and pressing step forms a batt having a thickness of from about 5 to 40 mm and a density of from about 200 to 2000 grams/m² for a thickness of 20 mm.

25. The method as defined in claim 24 wherein said blending step blends from about 15 to 20 percent thermoplastic fibers with from about 85 to 80 percent natural fibers.

26. The method as defined in claim 25 wherein said heating step forms a mat having a thickness of from about .5 to 1.5 mm.

27. A method of manufacturing an interior panel of a vehicle comprising the steps of:
carding fibers of copolymeric material;
lapping the carded fibers to form a pleated batt;
heating and pressing the fibers to a temperature for fusing adjacent fibers to form a batt;
carding and blending natural and thermoplastic fibers and heating this mixture to form a mat; and
feeding said batt and mats on opposite sides of said batt in a heated forming tool to form a panel.

28. The method as defined in claim 27 wherein said heating and pressing step forms a batt having a thickness of from about 5 to 40 mm and a density of from about 200 to 2000 grams/m² for a thickness of 20 mm.

29. The method as defined in claim 28 wherein said blending step blends from about 30 to 80 percent thermoplastic fibers with from about 70 to 20 percent natural fibers.

30. The method as defined in claim 29 wherein said heating step forms a mat having a thickness of from about .5 to 1.5 mm.

31. A vehicle panel comprising:
a sandwich structure having a central batt formed of thermoplastic fibers having a thickness of from about 5 to 40 mm, said batt surrounded on opposite sides by structural mats having a mixture of fibers including about 15 to 20 percent thermoplastic fibers and 85 to 80 percent natural fibers, wherein the mats are bonded to opposite sides of the batt by a thermosetting binder;
a polyester scrim layer bonded to each of said mats on a side remote from said batt; and
an upholstery material bonded to at least one of said scrim layers.

32. The panel as defined in claim 31 wherein said batt has a density of from about 200 to 2000 grams/m² at 20 mm thickness.

33. The panel as defined in claim 32 wherein said thermoplastic fibers of said batt are coaxial bi-component fibers with an outer layer having a lower melting point than their center.

34. The panel as defined in claim 33 wherein said outer layer of said copolymer fibers have a melting point of from about 130° to 200°C.

35. The panel as defined in claim 34 wherein each of said mats have a thickness of from about .5 to 1.5 mm.

36. The panel as defined in claim 35 wherein each of said mats comprise from about 15 to 20 percent of thermoplastic fibers and from about 85 to 80 percent natural fibers.

37. The panel as defined in claim 36 wherein said natural fibers are selected from a group including jute, sisal or kenaf.

38. The panel as defined in claim 37 wherein each of said mats have a thickness of from about .5 to 1.5 mm.
